# EUROPÄISCHE PATENTSCHRIFT

(11) **EP 0 569 842 B1**
(45) Veröffentlichungstag und Bekanntmachung des Hinweises auf die Patenterteilung: **13.12.1995**
(21) Anmeldenummer: 93107304.3
(22) Anmeldetag: 05.05.1993
(51) Int. Cl.: C09D 5/44

(54) **Elektrotauchlackbad enthaltend ein Urethan**
Electrodeposition coating containing a urethane
Peinture déposable par électrodéposition contenant un urethane

(30) Priorität: 11.05.1992 DE 4215480
(43) Veröffentlichungstag der Anmeldung: 18.11.1993
(73) Patentinhaber: HOECHST AKTIENGESELLSCHAFT, 65926 Frankfurt am Main (DE)
(72) Erfinder: Wehner, Susanne, W-6256 Villmar (DE); Klima, Heinz, A-2540 Bad Vöslau (AT); Hönel, Michael, Dr., W-6200 Wiesbaden (DE); Ziegler, Peter, Dr., W-6500 Mainz (DE); Walz, Gerd, Dr., W-6200 Wiesbaden (DE)

(56) Entgegenhaltungen:
- EP-A- 0 279 198
- EP-A- 0 350 618
- DE-A- 3 924 694

## Beschreibung

Die Grundierung von Metallteilen, insbesondere Autokarosserien erfolgt heute weitgehend durch ein Elektrotauchverfahren hauptsächlich in Form einer kationischen Elektrotauchlackierung (KTL). Hierbei wird das Substrat in ein wäßriges KTL-Bad getaucht und als Kathode geschaltet. Durch Anlegen von Gleichstrom scheidet sich dann das Bindemittel aus dem Bad auf dem Substrat ab. Anschließend wird das abgeschiedene Bindemittel durch Einbrennen oder andere Methoden ausgehärtet. Als Bindemittel für solche KTL-Bäder kommen insbesondere solche in Frage, die Aminogruppen enthalten. Mit Säure werden diese Aminogruppen in Ammoniumsalze überführt und die Bindemittel dann wasserlöslich oder wasserdispergierbar. Besonders bei der Erzeugung stärkerer Schichten auf verzinkten Substraten treten jedoch häufig Störungen im eingebrannten Film auf. Die Aufgabe der vorliegenden Erfindung besteht darin, diese Störungen zu vermeiden oder zu verringern.

Erfindungsgemäß wird diese Aufgabe dadurch gelöst, daß das Elektrotauchlackbad, insbesondere ein KTL-Bad, ein Urethan der Formel

*R₁ -NHCOO-R₂*

enthält, wobei
- R₁: C₄-C₂₂-, vorzugsweise C₁₀-C₁₅-Alkyl oder eine Gruppe der Formel

*B₁-NH-B₂-[X-B₃]*_{*n*}*-,*
- R₂: eine Gruppe der Formeln -(C₂H₄O)_{y}-R₁ -(C₃H₆O)_{y}-R oder der Formel 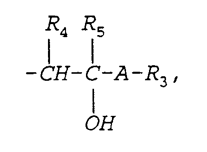
- R: C₁-C₁₈-Alkyl,
- Y: eine Zahl von null bis 4,
- B₁: Wasserstoff, C₁-C₁₈-Alkyl oder eine Gruppe der Formel

*-COOR₂,*
- B₂ und B₃: gleich oder verschieden sein können und C₂-C₁₄-Alkylen,
- n: eine ganze Zahl von 0 bis 5, vorzugsweise von 0 bis 2,
- X: -O-, -S-, -NH- oder 〉N-(C₁-C₄)Alkyl,
- R₃: Wasserstoff, C₁-C₁₈-Alkyl, C₁-C₁₀-Hydroxyalkyl, Phenyl, C₁-C₁₈-Al kylphenyl, C₂-C₁₀-Alkenyl,
- R₄ und R₅: gleich oder verschieden sein können und Wasserstoff oder C₁-C₄-Alkyl und
A eine direkte Bindung oder eine der Gruppen -O-, -CH₂O- oder -CH₂OCO-bedeuten.

Vorzugsweise handelt es sich bei den erfindungsgemäß zu verwendenden Urethanen um solche Urethane der oben angegebenen allgemeinen Formel, worin R₁ die Gruppe der Formel B₁-NH-B₂-(X-B₃)ₙ- bedeutet und die Molmassen Werte (Zahlenmittel) von ca. 160-1500, vorzugsweise von 250-1000, und Viskositäten von 300 mPa.s bis 3000 mPa.s aufweisen.

Diese Urethane werden nach an sich bekannten Verfahren erhalten. Die Urethane, bei denen R₂ Alkyl ist, werden erhalten durch Umsetzung von Isocyanaten der Formel R₁-NCO mit Alkoholen der Formel R₂-OH. Für den Fall, daß R₂ eine Gruppe der Formel 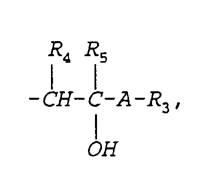
bedeutet, werden die Urethane hergestellt, indem man ein Amin der Formel R₁-NH₂ mit einem 2-Oxo-1,3-dioxolan der Formel 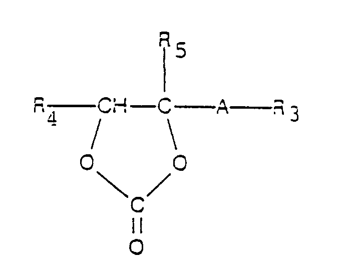
umsetzt. Bei der Umsetzung eines Mol von Di- oder Polyaminen der Formel H₂N-B₂-[X-B₃]ₙ-NH₂ mit mindestens zwei Mol eines 2-Oxo-1,3-dioxolan der obigen Formel erhält man in analoger Weise solche Urethane der eingangs genannten Formel, worin
- R₁: eine Gruppe der Formel B₁-NH-B₂-[X-B₃]ₙ-,
- B₁: eine Gruppe der Formel -COOR₂ und beide Gruppen R₂ einen Rest der Formel

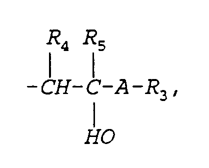

darstellen.

Beispiele für als Ausgangsverbindungen infrage kommende primäre Monoamine sind n-Butylamin, n-Octylamin, Tridecylamin, Isotridecylamin, 3-Methoxypropylamin, 3-(2-Ethylhexoxy)propylamin, Cyclohexylamin, Benzylamin, 2-Phenylethylamin, 2-Methoxyphenylethylamin.

Diprimäre Amine der allgemeinen Formel H₂N-B₂-[X-B₃]ₙ-NH₂, sind z.B. Diethylentriamin und höhere Homologe wie Triethylentetramin, Hexamethylendiamin, 2-Methylpentamethylendiamin, Bishexamethylentriamin.

Cyclische Monocarbonate, die mit den Aminen unter Bildung einer Urethanbindung umgesetzt werden können, sind z.B. Ethylencarbonat, Propylencarbonat, Dodecancarbonat oder Monocarbonate, die durch Umsatz von Monoepoxiden mit CO₂ hergestellt werden. Beispiele für solche Monoepoxide sind Glycidylester aliphatischer oder aromatischer, gesättigter oder ungesättigter Monocarbonsäuren, Acrylsäure, Methacrylsäure, Benzoesäure u.a. Ein sehr gebräuchlicher handelsüblicher Glycidylester ist eine Mischung gesättigter Monocarbonsäuren mit einer Kettenlänge von 9 bis 11 Kohlenstoffatomen, hauptsächlich bestehend (ungefähr 94 %) aus tertiären Säuren (Versaticsäureglycidylester). Weiterhin geeignet sind Monoglycidylether von einwertigen Phenolen z.B. von Phenol sowie von Alkylphenolen mit 1 bis 18, vorzugsweise 1 bis 12 C-Atomen im Alkylrest und Alkandiolen wie z.B. Ethylenglykol, Propylenglykol, Neopentylglykol, Hexandiol-1,6.

Zur Herstellung der erfindungsgemäßen Urethane werden die cyclischen Monocarbonate vorgelegt und auf 60 bis 120 °C, vorzugsweise 70 bis 90 °C geheizt. Das Amin wird langsam, innerhalb 2 Stunden zudosiert. Das Verhältnis von Monocarbonat zu primären Amin beträgt 0,8 - 1,2:1, vorzugsweise 1,0 - 1,1:1.

Durch die Mitverwendung dieser Urethane erhält man auf verzinkten Oberflächen Lackierungen, die keine bzw. nur wenige Oberflächenstörungen zeigen, da zum Erreichen der Sollschichtstärke aufgrund verbesserter Schichtbildungseigenschaften eine niedrigere Spannung angelegt werden kann und Oberflächenstörungen auf verzinkten Untergründen nicht bzw. erst bei höheren Spannungen und in verminderter Form auftreten.

Die erfindungsgemäßen Elektrotauchlackbäder enthalten alle hierfür üblichen Bindemittel, Vernetzer, Pigmente, Katalysatoren und Additive. Als Bindemittel kommen beispielsweise infrage selbst- oder bevorzugt fremdvernetzende kationische aminmodifizierte Epoxidharze.

Unter kationischen aminmodifizierten Epoxidharzen werden kationische Reaktionsprodukte aus
(A) ggf. modifizierten Polyepoxiden,
(B) primären und/oder sekundären Aminen bzw. deren Salzen und/oder Salzen von tertiären Aminen und ggf.
(C) Polyolen, Polycarbonsäuren, Polyaminen oder Polysulfiden verstanden.

Vorzugsweise kommen als Bindemittel jedoch kationische Aminourethanharze infrage, wie sie in EP-A 0 274 721, EP-A 0 272 665 und EP-A 234 395 beschrieben sind.

Soweit diese Bindemittel nicht selbstvernetzend sind, kommen als Vernetzungsmittel Phenoplaste, polyfunktionelle Mannichbasen, Melaminharze, Benzoguanaminharze oder blockierte Poly-Isocyanate infrage.

Die eingangs beschriebenen Urethane können auf mehreren Wegen in das Elektrotauchbad eingetragen werden, beispielsweise dadurch, daß das Urethan in die Lösung des Bindemittels in einem organischen Lösemittel gegeben wird oder über die Pigmentpaste.

Die Herstellung von Pigmentpasten ist allgemein bekannt (vgl. D.H. Parker, Principles of Surface Coating Technology, Interscience Publishers, New York (1965); R.L. Yates, Electropainting, Robert Draper Ltd., Teddington/England (1966); H.F. Payne, Organic Coating Technology, Band 2, Wiley and Sons, New York (1961)). Die Pigmentpasten können im Prinzip alle für Elektrotauchlacke geeigneten Pigmente enthalten. Im allgemeinen ist Titandioxid das einzige oder das hauptsächliche weiße Pigment. Andere weiße Pigmente oder Streckmittel, wie Antimonoxid, Zinkoxid, basisches Bleicarbonat, basisches Bleisulfat, Bariumcarbonat, Porzellan, Ton, Kalciumcarbonat, Aluminiumsilikat, Siliciumdioxid, Magnesiumcarbonat und Magnesiumsilikat können aber auch verwendet werden. Als farbige Pigmente können beispielsweise Cadmiumgelb, Cadmiumrot, Ruß, Phthalocyaninblau, Chromgelb, Toluidylrot und hydratisiertes Eisenoxid benutzt werden.

Die Pigmentpaste kann neben den Pigmenten auch noch Weichmacher, Füllstoffe, Netzmittel usw. enthalten.

Die Pigmentpaste wird in einer solchen Menge zur wäßrigen Dispersion des kathodisch abscheidbaren Kunstharzes gegeben, daß das fertige Elektrotauchlackbad die für die Abscheidung erforderlichen Eigenschaften aufweist. In den meisten Fällen beträgt das Gewichtsverhältnis zwischen Pigment und kathodisch abscheidbarem Kunstharz 0,05 bis 0,7.

Bevorzugt gibt man das Urethan direkt in das fertige Elektrotauchlackbad entweder in Form einer Lösung in einem organischen Lösemittel oder bevorzugt in Form einer sogenannten Korrekturdispersion.

Die Korrekturdispersion erhält man, indem man dem Urethan einen wasseremulgier-oder -dispergierbaren Hilfsstoff ionischer oder nicht-ionischer Natur (im folgenden Emulgator genannt) zusetzt. Beispiele für solche Emulgatoren sind Polyoxyalkylenamine wie zum Beispiel Jeffamin ® der Firma DEA, Polyethylenglykole, Ethylenoxid gepfropfte Alkylphenole, Sapogenate ®, Arkopale ® (beide Hoechst), oder Triton ® (Röhm & Haas). Weiterhin sind als Emulgatoren geeignet quaternisierte Epoxid- oder Carbonat-Amin-Addukte wie in EP-A 0 352 677 oder EP-A 0 350 618 oder EP-A 0 107 089 oder EP-A 0 107 098 beschrieben, sowie Epoxid- oder Carbonat-Amin-Addukte, die nach Protonierung wasseremulgierbar bzw. solubilisierbar sind, wie zum Beispiel in EP-A 0 000 086 oder EP-A 0 395 122 beschrieben oder Umsetzungsprodukte von Polyalkylenglykolen mit Polyglycidylethern mehrwertiger Phenole nach EP-A 0 081 163.

Die genannten Emulgatoren können in Mengen von 1 bis 25 % (fest/fest), vorzugsweise von 3 bis 15 % (fest/fest) dem Urethan oder einer Zubereitung, die dieses Urethan enthält, zugesetzt werden.

Die erfindungsgemäß eingesetzten Urethane werden in solchen Mengen in die Elektrotauchlackbäder eingearbeitet, daß die fertigen Lackbäder vorzugsweise 0,01 - 5,0 %, besonders bevorzugt 0,05 - 1,0 % und ganz besonders bevorzugt 0,1 - 0,3 % enthalten.

Es ist selbstverständlich, daß auch Mischungen unterschiedlicher Urethane eingesetzt werden können.

Die erfindungsgemäßen Elektrotauchlackbäder können neben dem kathodisch abscheidbaren Kunstharz, der Pigmentpaste und dem Urethan noch weitere übliche Zusatzstoffe enthalten, wie z.B. Zusatzlösungsmittel, Antioxidantien, oberflächenaktive Mittel usw.

Der Festkörpergehalt der erfindungsgemäßen Elektrotauchlackbäder beträgt vorzugsweise 7 bis 35 Gew.-Teile, besonders bevorzugt 12 bis 25 Gew.-Teile.

Der pH-Wert der Elektrotauchlackbäder liegt zwischen 4 und 8, vorzugsweise zwischen 5 und 7,5.

Die erfindungsgemäßen Elektrotauchlackbäder lassen sich zum Überziehen von beliebigen elektrisch leitenden Substraten, insbesondere aber zum Überziehen von Metallen, wie Stahl, Aluminium, Kupfer un. dgl. verwenden. Der Stahl kann verzinkt, phosphatiert, nicht-phosphatiert oder auf eine andere dem Fachmann bekannte Art und Weise vorbehandelt sein.

Die Erfindung betrifft auch ein Verfahren zum Beschichten elektrisch leitfähiger Substrate, bei dem das Substrat in ein wäßriges Elektrotauchlackbad, das mindestens ein kathodisch abscheidbares Kunstharz enthält, eingetaucht wird, das Substrat als Kathode geschaltet wird, durch Gleichstrom ein Film auf dem Substrat abgeschieden wird, das Substrat aus dem Elektrotauchlack entfernt wird und der abgeschiedene Lackfilm eingebrannt wird.

Das Verfahren ist dadurch gekennzeichnet, daß das wäßrige Elektrotauchlackbad ein Urethan enthält, wie eingangs definiert.

Das Elektrotauchlackbad wird mit einer elektrisch leitenden Anode und mit dem als Kathode geschalteten elektrisch leitfähigen Substrat in Berührung gebracht. Beim Durchgang von elektrischem Strom zwischen Anode und Kathode wird ein fest haftender Lackfilm auf der Kathode abgeschieden.

Die Temperatur des Elektrotauchlackbades soll zwischen 15 bis 40 °C, bevorzugt zwischen 25 und 35 °C liegen.

Die angelegte Spannung kann in einem großen Bereich schwanken und kann z.B. zwischen 2 und 1000 Volt liegen. Typischerweise wird aber mit Spannungen zwischen 50 und 500 Volt gearbeitet. Die Stromdichte liegt in der Regel zwischen etwa 10 und 3000 Ampere/m². Im Verlauf der Abscheidung fällt die Stromdichte ab.

Nach der Abscheidung wird der beschichtete Gegenstand abgespült und ist zum Einbrennen bereit.

Die abgeschiedenen Lackfilme werden im allgemeinen bei Temperaturen von 130 bis 200 °C über eine Zeitdauer von 10 bis 60 Minuten, vorzugsweise bei 150 bis 180 °C über eine Zeitdauer von 15 bis 30 Minuten, eingebrannt.

Die Erfindung wird in den folgenden Beispielen näher erläutert. Alle Angaben über Teile und Prozentsätze sind Gewichtsangaben, falls nicht ausdrücklich etwas anderes festgestellt wird.

### 1. Herstellung einer wäßrigen Bindemittel-Dispersion

**1.1.** Analog der EP-Offenlegungsschrift 0 000 086, Beispiel 31, wurde ein Epoxidaminaddukt wie folgt hergestellt:
210 Teile Diethanolamin, 102 Teile N,N-Dimethylaminopropylamin und 636 Teile eines Adduktes aus 1 mol 2-Methylpentamethylendiamin und 2 mol Glycidylester der Versaticsäure (Cardura® E10 von Shell) werden zu 3400 Teilen Bisphenol-A-Epoxidharz (Äquivalentgewicht ca. 480) in 2341 Teilen Methoxypropanol-2 (ca. 65%ig) gegeben. Das Reaktionsgemisch wurde 4 Stunden unter Rühren bei 60 bis 90°C und dann eine Stunde bei 120 °C gehalten.
- Hydroxylzahl:: ca. 155 mg KOH/g Festharz
- Aminzahl :: ca. 77 mg KOH/g Festharz

**1.2.** Herstellung der (teil-)verkappten Polyisocyanate
**1.2.1.** Zu 174 Teilen Desmodur® T80 (80% 2,4-, 20% 2,6-Toluylendiisocyanat; ca. 1 mol) werden bei 40 - 60 °C während 60 - 120 min 124 Teile (1,05 mol) Butylglykol und 0,3 Teile Dibutylzinnlaurat (DBTL) einlaufen gelassen und anschließend bis zu einem %NCO-Wert von ca. 12,8 - 13,5 bei dieser Temperatur gehalten.
**1.2.2.** Zu 298 Teilen der Verbindung 1.2.1. in 146 Teilen Toluol werden portionsweise 42,4 Teile Trimethylolpropan eingebracht und bei 80 °C bis zu einem %NCO-Wert von praktisch 0 umgesetzt (ca. 70%ig, 51% TDI).

**1.3.** Herstellung der Bindemitteldispersion
[A] Teile (siehe nachfolgende Tabelle 1) Bindemittellösung (1.1.) werden mit [B] Teilen Härterlösung (1.2.2.), 5 Teilen Texanol, 1,5 Teilen 2-Ethylhexanol und 2,3 Teilen 50%iger wäßriger Ameisensäure (MEQ25) vermischt und im Vakuum (bis zu 20 mbar) bei Temperaturen bis zu 80 °C auf ca. 90% Festkörper eingeengt. Anschließend werden mit 139 Teilen entionisiertem Wasser bei guter Rührung die beiden folgenden 40 %igen Dispersionen hergestellt:

**Tabelle 1**

| Bindemittel-Dispersion | [A] | [B] | dn* (nm) | dw* (nm) | % TDI/Bindemittel |
|---|---|---|---|---|---|
| | Teile | | | | |
| 1.4. | 123,7 | 28,0 | 240 | 560 | 10,0 |
| 1.5. | 120,6 | 32,7 | 216 | 500 | 12 |

| | | | | | |
|---|---|---|---|---|---|
| * mittlere Teilchendurchmesser (Zahlenmittel: dn, Gewichtsmittel: dw), bestimmt mit dynamischer Lichtstreuung. | | | | | |

### 2. Herstellung einer Pigmentpaste

(analog EP-A 0 352 677 Beispiel 1.3.)
**2.1. Herstellung eines Pastenharzes**
   **2.1.1.** Zu einer Lösung von 204 Teilen (2 mol) N,N-Dimethylaminopropylamin in 1224 Teilen Ethoxypropanol werden bei 60 - 80 °C während einer Stunde 1708 Teile (4 mol) Denacol® EX-145 (Phenol-(EO5)-glycidylether) einlaufen gelassen und anschließend bei 80 - 100 °C gehalten bis eine EP-Zahl von praktisch 0 erreicht ist (Aminzahl ca. 117 mgKOH/g Feststoff; ca. 60%ig).
      Zu dieser Lösung werden 72 Teile VE-Wasser und 400 Teile Milchsäure (90%ig) unter Kühlung einlaufen gelassen und anschließend mit 128 Teilen Butylglykol auf 60 % verdünnt.
   **2.1.2.** 1280 Teile (2 Äquiv. Epoxid) von Beckopox® SEP311 (75%ig in Xylol) werden auf 80 °C erwärmt. Zu dieser Lösung werden während einer Stunde 1184 Teile des Urethans (2.1.4., 75%ig) einlaufen gelassen und bei 80 °C gehalten bis der %NCO-Wert praktisch 0 ist. Anschließend wird im Vakuum vom Lösemittel befreit und mit 1232 Teilen Ethoxypropanol auf ca. 60 % verdünnt.
   **2.1.3.** In die unter (2.1.2.) erhaltene Lösung wird (2.1.1.) eingetragen und bei 60 - 80 °C gehalten bis eine Säurezahl und EP-Zahl von praktisch 0 erreicht wird. Das Pastenharz wird auf 55 % mit Butylglykol verdünnt.
   **2.1.4.** Zu 348 Teilen Desmodur® T80 (80 % 2,4-, 20 % 2,6-Toluylendiisocyanat) in 296 Teilen Xylol werden bei 40 - 60 °C 540 Teile Iso-Octadecylalkohol und 0,9 Teile DBTL während einer Stunde einlaufen gelassen und anschließend bis zu einem %NCO-Wert von ca. 9,5 bei dieser Temperatur gehalten (ca. 75%ig).
**2.2. Herstellung der Urethane**
   **2.2.1.** 305 Teile des Carbonats auf der Basis von Cardura® E10 (Shell) werden vorgelegt und auf 80 °C geheizt. 185 Teile Dodecylamin (Hoechst AG) werden langsam, innerhalb zwei Stunden zudosiert, daß 90 °C nicht überschritten werden. Nach beendeter Zugabe wird bei 80 °C gehalten und bis zum Erreichen der Aminzahl <10 (mg KOH/g) zur Reaktion gebracht.
      FK ca.100% (1h, 125 °C, DIN 53216) ca. 1700 mPa.s/T = 23 °C
   **2.2.2.** 610 Teile Cardura® E10-Carbonat werden vorgelegt und auf 80 °C geheizt. 215 Teile Bishexamethylentriamin (Rhône Poulenc) werden langsam, innerhalb zwei Stunden zudosiert, daß 90 °C nicht überschritten werden. Nach beendeter Zugabe wird bei 80 °C gehalten und bis zum Erreichen der Aminzahl <68 zur Reaktion gebracht.
      FK ca. 100 % (1 h, 125 °C, DIN 53 216) ca. 340 mPa.s/T = 23 °C
   **2.2.3.** 102 Teile Propylencarbonat werden vorgelegt und auf 80 °C geheizt. 199 Teile Tridecylamin werden langsam, innerhalb zwei Stunden zudosiert, daß 90 °C nicht überschritten werden. Nach beendeter Zugabe wird bei 80 °C gehalten und bis zum Erreichen der Aminzahl <10 zur Reaktion gebracht.
      FK ca.100 % (1 h, 125 °C, DIN 53 216) ca. 1200 mPa.s/T = 23 °C
**2.3. Herstellung der Pigmentpaste**
   **2.3.1.** Analog der DE 39 40 781 wird eine Dibutylzinnoxid-enthaltende Katalysatorpaste hergestellt (siehe Beispiel 5).
   **2.3.2.** Es werden 8,8 Teile Bindemittel nach 2.1.3.; 1,8 Teile Urethan nach 2.2.1.; 0,6 Teile Essigsäure (50%ig); 0,6 Teile 2,4,7,9-Tetramethyl-5-decin-4,7-diol (Surfynol 104®, Netzmittel); 12,3 Teile einer Paste nach 2.3.1. miteinander vermischt. Dazu werden unter Rühren 4,0 Teile Bleisilikat; 0,4 Teile Ruß und 40,2 Teile Titandioxid gegeben. Man stellt mit 31,3 Teilen VE-Wasser auf eine geeignete Viskosität ein und vermahlt die Pigmentpaste auf einer entsprechenden Mühle auf eine ausreichende Korngröße.
   **2.3.3.** Es wird verfahren wie in 2.3.2. mit der Maßgabe, daß anstatt 1,8 Teile Urethan nach 2.2.1. 1,8 Teile Urethan nach 2.2.2. eingesetzt werden.
   2.3.4. Es wird verfahren wie in 2.3.2. mit der Maßgabe, daß anstatt 1,8 Teile Urethan nach 2.2.1. 1,8 Teile Urethan nach 2.2.3. eingesetzt werden.
   **2.3.5.** Es wird verfahren wie in 2.3.2., aber ohne Urethan nach 2.2.1., d.h. vom Bindemittel nach 2.1.3. werden 10,6 Teile eingesetzt.

### 3. Lackzubereitung

300 Teile Bindemittel-Dispersion (40%ig) gemäß Beispielen 1.4. und 1.5. werden mit 180 Teilen VE-Wasser unter Rühren auf ca. 25 % Festkörper verdünnt. Diese Klarlacklösung wird mit 109 Teilen Pigmentpaste gemäß 2.3.2.; 2.3.3.; 2.3.4. und 2.3.5. und 1,2 Teilen 50%iger Ameisensäure versetzt. Anschließend wird mit VE-Wasser auf einen Festkörper von ca. 18 % eingestellt. PBV ca. 0,4 :1.

### 4. Abscheidung/Abscheidungsergebnisse

Die Lackzubereitungen werden der kataphoretischen Abscheidung in einem offenen Glasgefäß unterworfen. Als Kathode dienen verzinkte Substrate und als Anode, im Abstand von 5 bis 10 cm von der Kathode, blankes Stahlblech. Die Badtemperatur liegt bei 32 °C, die Abscheidedauer beträgt 2 Minuten. Die Rührung erfolgt über einen teflonbeschichteten Magnetrührstab.

**Tabelle 2**

| Dispersion gemäß | Paste gemäß | Elektrotauchlackbad |
|---|---|---|
| 1.4. | 2.3.2. | 1 |
| 1.4. | 2.3.3. | 2 |
| 1.4. | 2.3.4. | 3 |
| 1.4. | 2.3.5. | 4 |
| 1.5. | 2.3.2. | 5 |
| 1.5. | 2.3.3. | 6 |
| 1.5. | 2.3.4. | 7 |
| 1.5. | 2.3.5. | 8 |

Die jeweils angelegten Spannungen, die erzielten Filmdicken und die Eigenschaften der abgeschiedenen und anschließend gehärteten Filme (Einbrennbedingung 20 min, Ofentemperatur von 170 °C) sind in den nachstehenden Tabellen 3 und 4 wiedergegeben:

**Tabelle 3**

| Verwendung von feuerverzinkten Stahlblechen (Rb24/NL60) | | | | | | | | |
|---|---|---|---|---|---|---|---|---|
| Spannung (V) | Schichtdicke (»m) Elektrotauchlackbad Nr. | | | | | | | |
| | 1 | 2 | 3 | 4 | 5 | 6 | 7 | 8 |
| 200 | 13 | 13 | 13,5 | 12,5 | 13 | 13 | 13 | 12 |
| 225 | 15 | 15 | 17 | 14,5 | 15,5 | 16 | 16 | 14 |
| 250 | 18 | 17 | 18 | 16 | 18,5 | 18 | 17,5 | 15 |
| 275 | 20 | 19 | 19 | 17,5(O) | 20 | 22 | 21 | 17(O) |
| 300 | 25(O) | 24(O) | 23,5(O) | | 24(O) | 24(O) | 24(O) | |
| 325 | | | | | | | | |
| O = Oberflächenstörungen | | | | | | | | |

**Tabelle 4**

| Verwendung von elektrolytisch verzinkten Stahlblechen (Rb 26/NL 60) | | | | | | | | |
|---|---|---|---|---|---|---|---|---|
| Spannung (V) | Schichtdicke (»m) Elektrotauchlackbad Nr. | | | | | | | |
| | 1 | 2 | 3 | 4 | 5 | 6 | 7 | 8 |
| 200 | 19,5 | 17 | 18 | 14 | 17 | 18 | 16,5 | 14,5 |
| 225 | 24 | 23 | 24 | 18 | 19 | 19,5 | 19 | 17 |
| 250 | 29 | 28 | 28,5 | 24 | 26 | 24 | 25 | 23 |
| 275 | 34 | 33 | 34 | 28(O) | 32 | 26 | 27 | 26(O) |
| 300 | 39(O) | 37(O) | 39(O) | | 35(O) | 34(O) | 36(O) | |
| 325 | | | | | | | | |

### 5. Herstellung einer wäßrigen Bindemittel-Dispersion

**5.1.** wie unter 1.4. beschrieben
**5.2.** wie unter 1.5. beschrieben
**5.3.** wie 1.4. mit dem Unterschied, daß zur Bindemittellösung 1.1. und Härterlösung 1.2.2. 1,7 Teile des Urethans nach 2.2.1. zugegeben werden.
**5.4.** wie 1.4. mit dem Unterschied, daß zur Bindemittellösung 1.1. und Härterlösung 1.2.2. 1,7 Teile des Urethans nach 2.2.2. zugegeben werden.
**5.5.** wie 1.4. mit dem Unterschied, daß zur Bindemittellösung 1.1. und Härterlösung 1.2.2. 1,7 Teile des Urethans nach 2.2.3. zugegeben werden.
**5.6.** wie 1.5. mit dem Unterschied, daß zur Bindemittellösung 1.1. und Härterlösung 1.2.2. 1,7 Teile des Urethans nach 2.2.1. zugegeben werden.
**5.7.** wie 1.5. mit dem Unterschied, daß zur Bindemittellösung 1.1. und Härterlösung 1.2.2. 1,7 Teile des Urethans nach 2.2.2. zugegeben werden.
**5.8.** wie 1.5. mit dem Unterschied, daß zur Bindemittellösung 1.1. und Härterlösung 1.2.2. 1,7 Teile des Urethans nach 2.2.3. zugegeben werden.

### 6. Herstellung einer Pigmentpaste

Wie unter 2.3.5. beschrieben

### 7. Lackzubereitung

300 Teile Bindemittel-Dispersion (40%ig) gemäß Beispielen 5.1.; 5.2.; 5.3.; 5.4.; 5.5., 5.6., 5.7. und 5.8. werden mit 180 Teilen VE-Wasser unter Rühren auf ca. 25 % Festkörper verdünnt. Diese Klarlacklösung wird mit 109 Teilen Pigmentpaste gemäß 6. und 1,2 Teilen 50%iger Ameisensäure versetzt. Anschließend wird mit VE-Wasser auf einen Festkörper von ca. 18 % eingestellt. PBV: ca. 0,4:1.

### 8. Abscheidung/Abscheidungsergebnisse

Abscheidung erfolgt wie unter 4. beschrieben

**Tabelle 5**

| Dispersion gemäß | Paste analog | Elektrotauchlackbad |
|---|---|---|
| 5.1. | 6 | 9 |
| 5.2. | 6 | 10 |
| 5.3. | 6 | 11 |
| 5.4. | 6 | 12 |
| 5.5. | 6 | 13 |
| 5.6. | 6 | 14 |
| 5.7. | 6 | 15 |
| 5.8. | 6 | 16 |

**Tabelle 6**

| Verwendung von feuerverzinkten Stahlblechen (Rb 24/NL 60) | | | | | | | | |
|---|---|---|---|---|---|---|---|---|
| Spannung (V) | Schichtdicke (»m) Elektrotauchlackbad Nr. | | | | | | | |
| | 9 | 10 | 11 | 12 | 13 | 14 | 15 | 16 |
| 200 | 12,5 | 12 | 13,5 | 13 | 13 | 13 | 13 | 13 |
| 225 | 14,5 | 14 | 17 | 15 | 16 | 16 | 16 | 16,5 |
| 250 | 16 | 15 | 18 | 18 | 17 | 17,5 | 17 | 18 |
| 275 | 17,5(O) | 17(O) | 19 | 20 | 19,5 | 21 | 21 | 21 |
| 300 | | | 20,5(O) | 25 | 23(O) | 24(O) | 23(O) | 24(O) |
| 325 | | | | | | | | |

**Tabelle 7**

| Verwendung von elektrolytisch verzinkten Stahlblechen (Rb 26/NL 60) | | | | | | | | |
|---|---|---|---|---|---|---|---|---|
| Spannung (V) | Schichtdicke (»m) Elektrotauchlackbad Nr. | | | | | | | |
| | 9 | 10 | 11 | 12 | 13 | 14 | 15 | 16 |
| 200 | 14 | 14,5 | 19 | 17 | 18 | 16,5 | 16 | 16 |
| 225 | 18 | 17 | 23 | 23 | 23,5 | 18 | 18,5 | 18 |
| 250 | 24 | 23 | 28 | 27 | 27,5 | 20,5 | 20,5 | 20 |
| 275 | 28(O) | 26(O) | 34 | 32 | 33 | 27 | 25 | 23(O) |
| 300 | | | 38(O) | 36(O) | 35(O) | 36(O) | 34(O) | 32(O) |
| 325 | | | | | | | | |

### 9. Herstellung einer wäßrigen Bindemittel-Dispersion

**9.1.** analog zu 1.4.
**9.2.** analog zu 1.5.

### 10. Herstellung einer Pigmentpaste

Wie unter 2.3.5. beschrieben

### 11. Herstellung des Zusatzstoffes

**11.1.** Das Urethan 2.2.1. wird 1 : 1 mit Butylglykol gemischt.
**11.2.** Das Urethan 2.2.2. wird 1 : 1 mit Butylglykol gemischt.
**11.3.** Das Urethan 2.2.3. wird 1 : 1 mit Butylglykol gemischt.

### 12. Lackzubereitung

300 Teile Bindemittel-Dispersion (40%ig) gemäß Beispielen 9.1. und 9.2. werden mit 180 Teilen VE-Wasser unter Rühren auf ca. 25 % Festkörper verdünnt. Diese Klarlacklösung wird mit 109 Teilen Pigmentpaste gemäß 10. und 1,2 Teilen 50%iger Ameisensäure versetzt. Anschließend wird mit VE-Wasser auf einen Festkörper von ca. 18 % eingestellt und 4 Teile des Zusatzstoffes gemäß 11.1.; 11.2. und 11.3. zugesetzt (Einrühren mindestens eine Stunde). PBV ca. 0,4:1.

### 13. Abscheidung/Abscheidungsergebnisse

Abscheidung erfolgt wie unter 4. beschrieben

**Tabelle 8**

| Dispersion gemäß | Paste analog | Zusatzstoff | Elektrotauchlackbad |
|---|---|---|---|
| 9.1. | 10 | - | 17 |
| 9.1. | 10 | 11.1. | 18 |
| 9.1. | 10 | 11.2. | 19 |
| 9.1. | 10 | 11.3. | 20 |
| 9.2. | 10 | - | 21 |
| 9.2. | 10 | 11.1. | 22 |
| 9.2. | 10 | 11.2. | 23 |
| 9.2. | 10 | 11.3. | 24 |

**Tabelle 9**

| Verwendung von feuerverzinkten Stahlblechen (Rb 24/NL 60) | | | | | | | | |
|---|---|---|---|---|---|---|---|---|
| Spannung (V) | Schichtdicke (»m) Elektrotauchlackbad Nr. | | | | | | | |
| | 17 | 18 | 19 | 20 | 21 | 22 | 23 | 24 |
| 200 | 14,5 | 15 | 16 | 15 | 14 | 16 | 16,5 | 16 |
| 225 | 16 | 18 | 18 | 17 | 15 | 19 | 19 | 19,5 |
| 250 | 18 | 21 | 21 | 19 | 17 | 22 | 22,5 | 23 |
| 275 | 20,5(O) | 24 | 24 | 22 | 19(O) | 25 | 28 | 27 |
| 300 | | 27(O) | 27(O) | 25(O) | | 27(O) | 29(O) | 29(O) |
| 325 | | | | | | | | |

**Tabelle 10**

| Verwendung von elektrolytisch verzinkten Stahlblechen Bo26G | | | | | | | | |
|---|---|---|---|---|---|---|---|---|
| Spannung (V) | Schichtdicke (»m) Elektrotauchlackbad Nr. | | | | | | | |
| | 17 | 18 | 19 | 20 | 21 | 22 | 23 | 24 |
| 200 | 14 | 20,5 | 19 | 19,5 | 13,5 | 19,5 | 19,5 | 20 |
| 225 | 18 | 26 | 24 | 25 | 20 | 25 | 22 | 25 |
| 250 | 24 | 31,5 | 31 | 31 | 26 | 30 | 28 | 32 |
| 275 | 28(O) | 39 | 37 | 38 | 30(O) | 35 | 35 | 38 |
| 300 | | 44(O) | 42(O) | 42(O) | | 40(O) | 38(O) | 43(O) |

### 14. Herstellung einer wäßrigen Bindemittel-Dispersion

**14.1.** analog zu 1.4.
**14.2.** analog zu 1.5.

### 15. Herstellung einer Pigmentpaste

Wie unter 2.3.5. beschrieben

### 16. Herstellung eines Emulgators (Dispergiermittel)

4000 Teile PEG4000 (ca. 1 mol, Polyethylenglykol mit einer mittleren Molmasse von ca. 4000; Hoechst AG) werden mit 971 Teilen Toluol bei 130- 140 °C im Kreislauf entwässert.

Anschließend wird bei 100 - 120 °C und Vakuum vom Lösemittel befreit und mit 5,2 Teilen HBF4 (50 % in Wasser) versetzt. In diese gut gerührte Lösung werden langsam bei 100 - 130 °C 421 Teile Beckopox® EP140 (ca. 1,15 mol, Diglycidylether von Bisphenol A, EV183; Hoechst AG) einlaufen gelassen und bis zu einem EV von ca. 10000 bei dieser Temperatur gehalten.

### 17. Herstellung einer Korrektur-Dispersion

**17.1.** Eine Mischung aus 148 Teilen des Urethans gemäß 2.2.1. und 15 Teilen des Emulgators 16 werden mit 97 Teilen VE-Wasser dispergiert. Die Dispergierung erfolgt mit einer Rührvorrichtung, zum Beispiel mit einem schnell laufenden Rührer (Dissolver). Anschließend werden unter Rühren 740 Teile der Bindemittel-Dispersion gemäß 14.1. zugegeben.
**17.2.** gemäß 17.1. mit der Maßgabe, daß anstatt des Urethans 2.2.1. das Urethan 2.2.2. eingesetzt wird.
**17.3.** gemäß 17.1. mit der Maßgabe, daß anstatt des Urethans 2.2.1. das Urethan 2.2.3. eingesetzt wird.
**17.4.** gemäß 17.1. mit der Maßgabe, daß anstatt der Bindemittel-Dispersion 14.1. die Bindemittel-Dispersion 14.2. eingesetzt wird.
**17.5.** gemäß 17.2. mit der Maßgabe, daß anstatt der Bindemittel-Dispersion 14.1. die Bindemittel-Dispersion 14.2. eingesetzt wird.
**17.6.** gemäß 17.3. mit der Maßgabe, daß anstatt der Bindemittel-Dispersion 14.1. die Bindemittel-Dispersion 14.2. eingesetzt wird.

### 18. Lackzubereitung

290 Teile Bindemittel-Dispersion (40%ig) gemäß Beispielen 14.1. und 14.2. werden mit 180 Teilen VE-Wasser unter Rühren auf ca. 25 % Festkörper verdünnt. Diese Klarlacklösung wird mit 109 Teilen Pigmentpaste gemäß 15. und 1,2 Teilen 50 %iger Ameisensäure versetzt. Anschließend wird die Korrektur-Dispersion gemäß 17.1.; 17.2.; 17.3.; 17.4.; 17.5. und 17.6. zugegeben und mit VE-Wasser auf einen Festkörper von ca. 18 % eingestellt. PBV 0,4:1.

### 19. Abscheidung/Abscheidungsergebnisse

Abscheidung erfolgt wie unter 4. beschrieben

**Tabelle 11**

| Dispersion gemäß | Paste analog | Korrektur-Dispersion gemäß | Elektrotauchlackbad |
|---|---|---|---|
| 14.1. | 15 | - | 25 |
| 14.1. | 15 | 17.1. | 26 |
| 14.1. | 15 | 17.2. | 27 |
| 14.1. | 15 | 17.3. | 28 |
| 14.2. | 15 | - | 29 |
| 14.2. | 15 | 17.4. | 30 |
| 14.2. | 15 | 17.5. | 31 |
| 14.2. | 15 | 17.6. | 32 |

**Tabelle 12**

| Verwendung von feuerverzinkten Stahlblechen (Rb 24/NL 60) | | | | | | | | |
|---|---|---|---|---|---|---|---|---|
| Spannung (V) | Schichtdicke (»m) Elektrotauchlackbad Nr. | | | | | | | |
| | 25 | 26 | 27 | 28 | 29 | 30 | 31 | 32 |
| 200 | 12,5 | 13,5 | 14 | 14 | 12 | 13,5 | 13 | 13 |
| 225 | 14,5 | 17 | 15,5 | 17 | 14 | 18 | 15 | 15 |
| 250 | 16 | 18 | 17 | 19 | 15 | 19 | 16 | 17 |
| 275 | 17,5(O) | 19 | 19 | 22 | 17(O) | 20 | 21 | 19 |
| 300 | | 20,5(O) | 24(O) | 24(O) | | 24(O) | 24(O) | 23(O) |
| 325 | | | | | | | | |
| O = Oberflächenstörungen | | | | | | | | |

**Tabelle 13**

| Verwendung von elektrolytisch verzinkten Stahlblechen (Rb 26/NL 60) | | | | | | | | |
|---|---|---|---|---|---|---|---|---|
| Spannung (V) | Schichtdicke (»m) Elektrotauchlackbad Nr. | | | | | | | |
| | 25 | 26 | 27 | 28 | 29 | 30 | 31 | 32 |
| 200 | 14 | 17 | 18 | 17 | 14,5 | 16 | 16,5 | 14,5 |
| 225 | 18 | 23 | 24 | 23 | 17 | 18,5 | 18 | 16 |
| 250 | 24 | 27 | 29 | 28 | 23 | 21 | 20,5 | 18 |
| 275 | 28(O) | 32 | 34 | 33 | 26(O) | 25 | 27 | 23 |
| 300 | | 36(O) | 38(O) | 37(O) | | 34(O) | 36(O) | 32(O) |
| 325 | | | | | | | | |

## Patentansprüche

1. Elektrotauchlackbad enthaltend ein Urethan der Formel
*R₁-NHCOO-R₂*
enthält, wobei
R₁ C₄-C₂₂-, vorzugsweise C₁₀-C₁₅-Alkyl oder eine Gruppe der Formel
*B₁-NH-B₂-[X-B₃]*_{*n*}*-,*
R₂ eine Gruppe der Formeln -(C₂H₄O)_{y}-R₁ -(C₃H₆O)_{y}-R oder der Formel 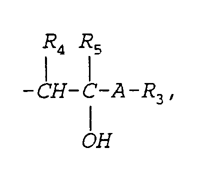
R C₁-C₁₈-Alkyl,
Y eine Zahl von Null bis 4,
B₁ Wasserstoff, C₁-C₁₈-Alkyl oder eine Gruppe der Formel
*-COOR₂,*
B₂ und B₃ gleich oder verschieden sein können und C₂-C₁₄-Alkylen,
n eine ganze Zahl von 0 bis 5, vorzugsweise von 0 bis 2,
X -O-, -S-, -NH- oder 〉N-(C₁-C₄)Alkyl,
R₃ Wasserstoff oder C₁-C₁₈-Alkyl, Hydroxyalkyl, Phenyl, C₁-C₁₈-Alkylphenyl, C₂-C₁₀-Alkenyl
R₄ und R₅ gleich oder verschieden sein können und Wasserstoff oder C₁-C₄-Alkyl und
A eine direkte Bindung oder eine der Gruppen -O-, -CH₂O- oder -CH₂OCO-bedeuten.

2. Elektrotauchlackbad nach Anspruch 1 enthaltend ein Urethan der Formel
*R₁-NHCOO-R₂*
worin
R₁ C₄-C₂₂Alkyl und R₂- eine Gruppe der Formel, 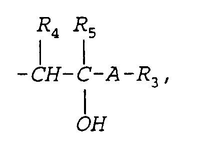
bedeuten.

3. Elektrotauchlackbad nach Anspruch 1, dadurch gekennzeichnet, daß es ein kationisch abscheidbares Bindemittel enthält.

4. Elektrotauchlackbad nach Anspruch 1, dadurch gekennzeichnet, daß es ein kationisches Aminourethanharz enthält.

5. Elektrotauchlackbad nach Anspruch 1, dadurch gekennzeichnet, daß es ein kationisches aminmodifiziertes Epoxidharz enthält.

6. Verfahren zur Beschichtung elektrisch leitfähiger Substrate, bei dem
das Substrat in ein wäßriges Elektrotauchlackbad, das mindestens ein kathodisch abscheidbares Kunstharz enthält, eingetaucht wird,
das Substrat als Kathode geschaltet wird,
durch Gleichstrom ein film auf dem Substrat abgeschieden wird
das Substrat aus dem Elektrotauchlack entfernt wird und
der abgeschiedene Lackfilm eingebrannt wird,
dadurch gekennzeichnet, daß das Elektrotauchbad ein urethan nach Anspruch 1 oder 2 enthält.

7. Substrat beschichtet nach dem Verfahren gemäß Anspruch 6.

## Claims

1. An electrodeposition bath comprising a urethane of the formula
R₁-NHCOO-R₂
in which
R₁ is C₄-C₂₂-alkyl, preferably C₁₀-C₁₅-alkyl or a group of the formula
B₁-NH-B₂-[X-B₃]ₙ-,
R₂ is a group of the formulae -(C₂H₄O)_{y}-R₁, -(C₃H₆O)_{y}-R or of the formula 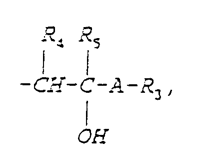
R is C₁-C₁₈-alkyl,
Y is a number from zero to 4,
B₁ is hydrogen, C₁-C₁₈-alkyl or a group of the formula
-COOR₂,
B₂ and B₃ may be identical or different and are C₂-C₁₄-alkylene,
n is an integer from 0 to 5,
X is -O-, -S-, -NH- or >N-(C₁-C₄)alkyl,
R₃ is hydrogen, C₁-C₁₈-alkyl, hydroxyalkyl, phenyl, C₁-C₁₈-alkylphenyl or C₂-C₁₀-alkenyl,
R₄ and R₅ may be identical or different and are hydrogen or C₁-C₄-alkyl and
A is a direct bond or one of the groups -O-, -CH₂O- or -CH₂OCO-.

2. The electrodeposition bath as claimed in claim 1, comprising a urethane of the formula
R₁-NHCOO-R₂
in which
R₁ is C₄-C₂₂-alkyl and R₂ is a group of the formula

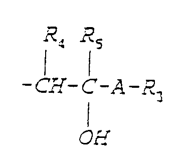

3. The electrodeposition bath as claimed in claim 1, which comprises a cationically depositable binder.

4. The electrodeposition bath as claimed in claim 1, which comprises a cationic amino-urethane resin.

5. The electrodeposition bath as claimed in claim 1, which comprises a cationic amine-modified epoxy resin.

6. A method of coating electrically conductive substrates, in which the substrate is immersed in an aqueous electrodeposition bath containing at least one cathodically depositable synthetic resin, the substrate is connected as the cathode, a film is deposited on the substrate by direct current, the substrate is removed from the electrodeposition and the coating film deposited is stoved, wherein the electrodeposition bath contains a urethane as claimed in claim 1 or 2.

7. A substrate coated by the method as claimed in claim 6.

## Revendications

1. Bain de peinture par électrodéposition contenant un uréthanne de formule
R₁-NHCOO-R₂,
R₁ signifiant un alkyle en C₄-C₂₂, de préférence en C₁₀-C₁₅, ou un groupe de formule
B₁-NH-B₂-[X-B₃]ₙ-,
R₂ signifiant un groupe de formules -(C₂H₄O)_{y}-R₁ - (C₃H₆O)_{y}-R ou de formule 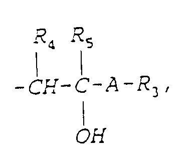
R signifiant un alkyle en C₁-C₁₈,
Y signifiant un chiffre allant de zéro à 4,
B₁ signifiant un hydrogène, un alkyle en C₁-C₁₈ ou un groupe de formule
-COOR₂,
B₂ et B₃ pouvant être identiques ou différents et signifiant un alkylène en C₂-C₁₄,
n étant un nombre entier allant de 0 à 5, de préférence de 0 à 2,
X signifiant -O-, -S-, -NH- ou 〉N-alkyle en C₁-C₄,
R₃ signifiant un hydrogène ou un alkyle en C₁-C₁₈, un hydroxyalkyle, un phényle, un (alkyl en C₁-C₁₈)-phényle, un alcényle en C₂-C₁₀,
R₄ et R₅ pouvant être identiques ou différents et signifiant un hydrogène ou un alkyle en C₁-C₄ et
A signifiant une liaison directe ou un des groupes -O-, -CH₂O- ou -CH₂OCO-.

2. Bain de peinture par électrodéposition selon la revendication 1 contenant un uréthanne de formule
R₁-NHCOO-R₂,
dans laquelle
R₁ signifie un alkyle en C₄-C₂₂ et R₂ un groupe de formule

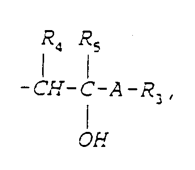

3. Bain de peinture par électrodéposition selon la revendication 1, caractérisé en ce qu'il contient un agent liant déposable par voie cationique.

4. Bain de peinture par électrodéposition selon la revendication 1, caractérisé en ce qu'il contient une résine amino-uréthanne cationique.

5. Bain de peinture par électrodéposition selon la revendication 1, caractérisé en ce qu'il contient une résine époxyde cationique, modifiée par des amines.

6. Procédé d'enduction de substrats conduisant
l'électricité, dans lequel le substrat est immergé dans un bain aqueux de peinture par électrodéposition contenant au moins une résine synthétique déposable par voie cationique, le substrat est mis en circuit en tant que cathode,
un film est déposé sur le substrat grâce à un courant, le substrat est retiré de la peinture par électrodéposition et le film de peinture déposée est recuit,
caractérisé en ce que le bain électrodéposable contient un uréthanne selon la revendication 1 ou 2.

7. Substrat enduit selon le procédé conforme à la revendication 6.
